# EUROPÄISCHE PATENTSCHRIFT

(11) **EP 1 753 592 B1**
(45) Veröffentlichungstag und Bekanntmachung des Hinweises auf die Patenterteilung: **28.08.2013**
(21) Anmeldenummer: 05753849.8
(22) Anmeldetag: 23.05.2005
(51) Int. Cl.: B29C 44/16, B29C 45/17, B29C 49/02

(54) **VERFAHREN DER HERSTELLUNG VON KUNSTSTOFFFORMTEILEN**
METHOD FOR PRODUCING MOLDED PLASTIC ARTICLES
PROCEDE POUR FABRIQUER DES PIECES MOULEES EN PLASTIQUE

(30) Priorität: 24.05.2004 DE 102004025842
(43) Veröffentlichungstag der Anmeldung: 21.02.2007
(73) Patentinhaber: Heim, Hans-Peter, 33332 Gütersloh (DE); Ridder, Helmut, 33129 Delbrück (DE)
(72) Erfinder: POTENTE, Helmut, 33098 Paderborn (DE); HEIM, Hans-Peter, 33332 Gütersloh (DE); RIDDER, Helmut, 33129 Delbrück (DE)
(74) Vertreter: Holland, Ralf
(86) Internationale Anmeldenummer: PCT/DE2005/000948
(87) Internationale Veröffentlichungsnummer: WO 2005/113214

(56) Entgegenhaltungen:
- DE-U1- 29 807 549
- JP-A- 54 034 378
- US-A- 5 887 315
- US-B1- 6 197 245
- PATENT ABSTRACTS OF JAPAN Bd. 1999, Nr. 04, 30. April 1999 (1999-04-30) & JP 11 005227 A (TAKEHIRO:KK), 12. Januar 1999 (1999-01-12)
- PATENT ABSTRACTS OF JAPAN Bd. 1997, Nr. 03, 31. März 1997 (1997-03-31) & JP 08 290486 A (ASAHI CHEM IND CO LTD), 5. November 1996 (1996-11-05)
- PATENT ABSTRACTS OF JAPAN Bd. 1996, Nr. 02, 29. Februar 1996 (1996-02-29) & JP 07 256686 A (TOYODA GOSEI CO LTD), 9. Oktober 1995 (1995-10-09)
- PATENT ABSTRACTS OF JAPAN Bd. 1995, Nr. 10, 30. November 1995 (1995-11-30) & JP 07 186178 A (TOYODA GOSEI CO LTD), 25. Juli 1995 (1995-07-25)
- PATENT ABSTRACTS OF JAPAN Bd. 1995, Nr. 08, 29. September 1995 (1995-09-29) & JP 07 124985 A (KYORAKU CO LTD), 16. Mai 1995 (1995-05-16)
- PATENT ABSTRACTS OF JAPAN Bd. 1995, Nr. 05, 30. Juni 1995 (1995-06-30) & JP 07 040424 A (KYORAKU CO LTD), 10. Februar 1995 (1995-02-10)
- PATENT ABSTRACTS OF JAPAN Bd. 018, Nr. 435 (M-1655), 15. August 1994 (1994-08-15) & JP 06 134828 A (MITSUBISHI KASEI CORP), 17. Mai 1994 (1994-05-17)
- PATENT ABSTRACTS OF JAPAN Bd. 017, Nr. 565 (M-1495), 13. Oktober 1993 (1993-10-13) & JP 05 162161 A (ASAHI CHEM IND CO LTD), 29. Juni 1993 (1993-06-29)
- PATENT ABSTRACTS OF JAPAN Bd. 017, Nr. 524 (M-1483), 21. September 1993 (1993-09-21) & JP 05 138721 A (TOYODA GOSEI CO LTD), 8. Juni 1993 (1993-06-08)
- PATENT ABSTRACTS OF JAPAN Bd. 015, Nr. 120 (M-1096), 25. März 1991 (1991-03-25) & JP 03 009820 A (ASAHI CHEM IND CO LTD), 17. Januar 1991 (1991-01-17)
- PATENT ABSTRACTS OF JAPAN Bd. 013, Nr. 434 (M-875), 28. September 1989 (1989-09-28) & JP 01 168425 A (TOYODA GOSEI CO LTD), 3. Juli 1989 (1989-07-03)
- PATENT ABSTRACTS OF JAPAN Bd. 018, Nr. 094 (M-1561), 16. Februar 1994 (1994-02-16) & JP 05 301262 A (ASAHI CHEM IND CO LTD; others: 01), 16. November 1993 (1993-11-16)
- PATENT ABSTRACTS OF JAPAN Bd. 017, Nr. 226 (M-1405), 10. Mai 1993 (1993-05-10) & JP 04 357009 A (ASAHI CHEM IND CO LTD), 10. Dezember 1992 (1992-12-10)

## Beschreibung

Die Erfindung betrifft ein Verfahren zum Herstellen von Kunststoffbauteilen.

Viele Kunststoffbauteile werden mittels Gasinjektionsverfahren hergestellt. Die Gasinjektionstechnik ist ein Spritzgießsonderverfahren, bei dem nach oder während des eigentlichen Spritzvorgangs mittels eines druckbeaufschlagten Fluids ein Hohlraum erzeugt wird. Die Gasinjektionstechnik wird regelmäßig dann angewendet, wenn eine gleichmäßige Ausformung dickwandiger Bereiche ohne Einfallstellen oder Geometrien mit hoher Torsionssteifigkeit erreicht werden sollen. Weitere Vorteile liegen in der großen Designfreiheit, der gleichmäßigen Schwindung und somit weniger Verzug, ferner gegenüber dickwandigen Kompaktteilen kürzeren Zykluszeiten, Gewichtseinsparungen und der reduzierte Zahl von Bindenähten.

Gasinjektionsverfahren sind unter Verfahrens- bzw. Markennamen wie Airmold, Airpress, CINPRES, GAIN, GID, GIP bekannt geworden. Im wesentlichen werden zwei Verfahren unterschieden, das Aufblasverfahren, ein Standard-Gasinjektionsverfahren sowie Kernzugverfahren, und das Ausblasverfahren, ein Nebenkavitätenverfahren, bzw. das Rückblasverfahren. Darüber hinaus existieren ein Vielzahl von Varianten dieser Verfahren.

Eine wichtige Größe bei den Gasinjektionsverfahren ist die Wandstärke von Hohlräumen des fertigen Bauteils. Diese beeinflusst den Materialverbrauch, die erforderliche Kühlzeit, die Oberflächenqualität, die mechanischen Eigenschaften und somit die Teilekosten. Verschiedene Möglichkeiten zur Beeinflussung der Wandstärke wurden bereits diskutiert, z.B. Werkzeug- oder Massetemperatur. Zum Einfluß von Verfahrensparametern auf die Wandstärke bzw. auf die Ausbildung des Hohlraums wurden in den vergangenen Jahren diverse Untersuchungen von verschiedenen Instituten und Unternehmen durchgeführt, deren Ergebnisse in der Fachliteratur zu finden sind.

Die WO 03/011557 offenbart ein Verfahren, bei dem nach dem Einspritzen des Kunststoffes und Eindüsen des Gases in einem zweiten Schritt durch Öffnen eines Ventils ein Teil des Kunststoffes ausgetrieben wird und anschließend durch weitere Druckaufgabe der Kunststoffhohlkörper verfestigt wird.

In der DE 19963896 ist ein Verfahren zum Herstellen eines Stossfängers durch Spritzgießen und Blasformen beschrieben. Ausgehend von einem üblichen Spritzgussteil dient das Verfahren im Wesentlichen der Vermeidung von Einfallstellen. Im Gegensatz zu dem Gasinjektionsaufblasverfahren wird nicht die Außenkontur des Werkstückes durch Blasformen verändert sondern im Prinzip Rippen an eine Frontplatte angeschweißt, indem Schmelze aus dem Bauteil mittels des angebundenen Gaskanals verdrängt wird, um die Verbindung zu erzeugen.

Die EP 0545693 beschreibt einen spritzgegossenen Gegenstand von hochwertigem Aussehen. Zur Vermeidung von Einfallstellen auf der Oberfläche des Grundkörpers, die dem dickwandigen Teil, z.B. einer Versteifungsrippe, gegenüberliegt, besitzt der dickwandige Teil einen hohlen Teil. In diesem wird ein unter Druck stehendes Gas eingeleitet und der Druck solange gehalten, bis der geschmolzene Kunststoff abkühlt und die Volumenschwindung größtenteils abgeschlossen ist.

Aus der DE 19983733 ist die Herstellung blasgeformter Artikel durch ein Spritzgussverfahren bekannt. Das Expandieren erfolgt hier durch das Einblasen von Druckgas in die Schmelze.

US 6197245 und JP04357009 zeigen weitere Verfahren wobei Spritzgiessen und Blasformen kombiniert werden.

Prozesse, bei denen Gas in das geschmolzene Material bei der Formmaschinendüse oder in den Fluss oder direkt in das geschmolzene Material injiziert wird, sind beschrieben. Als Ergebnis der dort vorgestellten Prozesse wird in der EP 0624121 festgehalten, dass es praktisch unmöglich ist, Oberflächen auf flachen Formteilen zu schaffen, die nicht die Anwesenheit von Rippen, Beulen oder Stegen auf der gegenüberliegenden Seite anzeigen. Demnach können mit derartigen Verfahren hergestellte Kunststoffbauteile den Erfordernissen der Automobilindustrie nicht genügen, da Oberflächenqualitäten der Klasse A nicht erreicht werden können.

Weitere Methoden zum Herstellen leichtgewichtiger, hohler Formteile sind das Extrusionsblasformen und das Spritzblasen. Diese umfassen das Blasen eines Rohlings mit Luft, die von innen darauf angewendet wird, um so den Rohling der Werkzeugkontur anzupassen. Der so in einem Standard-Spritzgieß-Verfahren erhaltene Vorformling wird in einen weiteren Verfahrensschritt Aufgeblasen. Bei einem Extrusionsblasformen wird ein extrudierter Vorformling aufgeblasen.

Aufblasverfahren werden vor allem eingesetzt, um dünnwandige Kunststoffhohlkörper herzustellen. Insbesondere wird dieses Verfahren zur Produktion von Kunststoffflaschen und großvolumigen Behältern, Sportgeräten und Kinderspielzeug verwendet. Typisch für das Extrusionsblasen sind z.B. Waschmittelflaschen und Kunststoffkraftstoffbehälter, für das Spritzblasen z.B. PET-Getränke-Flaschen. Ein derartiges Verfahren ist z.B. in der US 5954224 beschrieben.

In der DE 19825104 wird ein Kunststoffbehälter und ein Verfahren für dessen Herstellung beschrieben. Dort werden Kanäle entlang des gewünschten Verlaufs ausgeblasen. Eine Vergrößerung des hohlen Querschnittes erfolgt nicht.

Mit dem bisherigen Stand der Technik ist es möglich, dünnwandige komplexe Bauteile ohne Hohlraum oder relativ dünnwandige Hohlräume einfacher Außengeometrie mit der herkömmlichen Gasinjektionstechnik herzustellen. Sofern mit einem Gasinjektionsverfahren dickwandige Bauteile mit Hohlräumen mit relativ großen Wandstärken hergestellt werden, weicht der Hohlraumquerschnitt jedoch zunehmend von der Außenkontur ab. Die Querschnittsfläche der Gasblase ist nicht beliebig einstellbar und es kann je nach Gasführungskanalgeometrie und vorliegenden Verarbeitungsparametern nur ein bestimmter maximaler Endwert erreicht werden. Dies hat wiederum zur Folge, dass eine minimale Restwandstärke des Polymers nicht unterschritten werden kann.

Mit Hilfe des Extrusionsblasformens sind zwar relativ komplexe Hohlkörper mit geringer Wanddicke herstellbar, die Anbindung von dünnwandigen, präzisen Geometrien an den Hohlraum ist mit diesem Verfahren ohne nachfolgenden Prozess allerdings nicht möglich.

Der Spritzblasprozess ermöglicht die Herstellung präziser, sehr dünnwandiger Hohlkörper. Aufgrund des Herstellverfahrens der Vorformlinge in einem Standard-Spritzgießverfahren ist es jedoch nicht möglich, Hohlräume im Vorformling zu realisieren und damit die entsprechenden Aufblasgeometrien, die nicht mit Hilfe von Kernen im Standard Spritzguss erzielt werden können.

Ausgehend von diesem Stand der Technik lag der Erfindung die Aufgabe zugrunde, ein Verfahren zur Produktion von Kunststoffbauteilen mit komplexer Hohlraumgeometrie zu entwickeln.

Die Aufgabe wird erfindungsgemäß durch die in den Ansprüchen wiedergegebenen Verfahren bzw. Verfahrenschritte gelöst.

Ein wesentlicher Erfindungsgedanke besteht dabei in der Kombination der Gasinjektionstechnik mit einem anschließenden Aufblasverfahren. Ein solches, dem Gasinjektionsprozess nachgeschaltetes Aufblasverfahren erlaubt es, Funktionshohlräume mit extrem geringen Wandstärken herzustellen. Ein grundlegender Gedanke ist, dass durch ein weiteres Verstrecken, Recken und/oder Dehnen der sich während des Gasinjektionsprozesses gebildeten Stege oder Hohlraumwände die dünnwandigen Bereiche gebildet werden, die anschließend die Wände des Funktionshohlraumes darstellen. Dazu wird in einem ersten Verfahrensschritt bspw. ein Standard Gasinjektionstechnik-Formteil hergestellt. Danach wird die Werkzeugkavität wesentlich vergrößert und durch ein erneutes Aufbringen oder Halten des Gasdruckes kann der extrem dünnwandige Funktionskanal durch Hohlraumvergrößerung herstellt werden.

Des Weiteren ermöglicht das Verfahren die Anbindung von dünnwandigen, präzisen Bauteilbereichen an die Hohlraumgeometrie. Die Hohlraumgeometrie kann aufgrund des erfindungsgemäßen Verfahrens sehr große Hohlraumquerschnitte bei geringen Wandstärken aufweisen.

Die Kombination von Gasinjektionsverfahren mit dem Aufblasverfahren bietet demnach herausragende Möglichkeiten, die automatisierte Produktion von Kunststoffbauteilen zu erweitern und somit auch deren Einsatzbereich und Möglichkeiten.

Insbesondere können auch Formen hergestellt werden, die mit bisherigem Spritzguss nicht möglich sind. Im Hinblick auf die Gasinjektionsverfahren günstige Formteile sind lange, schlanke und dickwandige, z.B. stabförmige Formteile, flächige Formteile mit Gaskanälen als Fließhilfe oder Verrippungen, Teile mit partiellen Masseanhäufungen oder Rohre. Dünnwandige Formteile benötigen dickwandige Strömungskanäle, durch die das Gas strömen kann. Ein Eindringen des Gases in dünnwandige Bereiche sollte so weit wie möglich vermieden werden.

Insbesondere erlaubt das Verfahren nach der Erfindung das Erstellen eines Vorformlings mit einem an wenigstens eine Wand eines Hohlraums angebundenen, sich im wesentlichen flächenhaft ersteckenden Bauteilbereich, anschließend erfolgt eine Vergrößerung der die Hohlraumgeometrie einbindenden Werkzeugkavität und das Aufweitens des Holraums durch ein Einbringen eines druckbeaufschlagten Fluids unter Verringerung der Wandstärken des Hohlraums. Als Fluid kann ein Gas Verwendung finden oder ein eine flüssige Phase aufweisendes. Alternativ kann das Fluid eine in dem Hohlraum erstarrende Polymerschmelze sein, wobei durch ein Aufschäumen der Polymerschmelze auch eine Druckbeaufschlagung erfolgen kann.

Die Erfindung wird anhand der Zeichnung näher erläutert, in der lediglich schematisch Kunststoffbauteile dargestellt sind. In der Zeichnung zeigt:
- Fig. 1:: einen in einem Gasinjektionsverfahren hergestellten Vorformling in einem Querschnitt,
- Fig. 2:: in einem Querschnitt ein in einem Gasinjektionsverfahren hergestelltes Kunststoffbauteil,
- Fig. 3:: den Vorformling nach Fig. 1 nach einem Aufblasprozess
- Fig. 4:: das Kunststoffformteil nach Fig. 3 in einer isometrischen Darstellung und
- Fig. 5:: ein Beispiel einer komplexer Hohlraumgeometrie,

Die Gasinjektionstechnik ist ein Spritzgießsonderverfahren, bei dem nach einer definierten Polymerfüllung des Spritzgießwerkzeuges ein Fluid in die noch schmelzflüssige Phase der Polymerfüllung injiziert wird. Durch die Gasinjektion werden die bis dahin noch ungefüllten Werkzeugbereiche gefüllt, indem im so genannten Gasführungskanal ein Hohlraum ausgebildet wird. Als Fluid kann ein Gas oder auch z.B. Wasser, Öl oder dergleichen verwendet werden. Der nachgeschaltete Aufblasprozess, der nach dem Gasinjektionsprozess gestartet wird, erlaubt es Funktionshohlräume mit großen Hohlraumquerschnitten und dünnwandigen Wanddicken herzustellen. Durch das weitere Verstrecken, Recken und/oder Dehnen der sich gebildeten Stege oder Wände werden dann die dünnwandigen Hohlraumwände gebildet. Dies gilt für alle Verfahrensvarianten der Gasinjektionstechnik gleichermaßen.

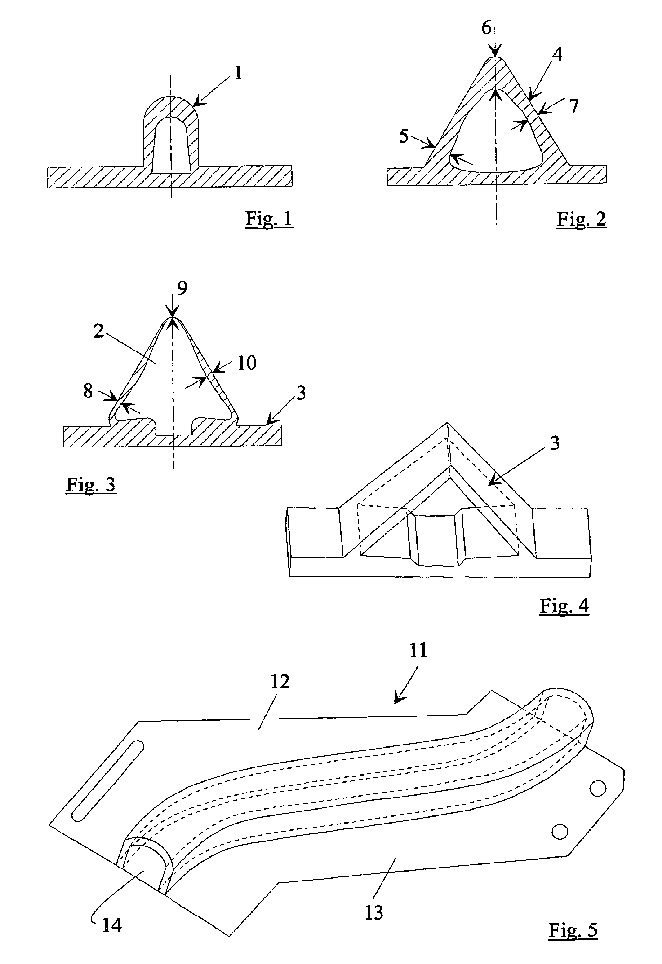

Zunächst wird ein Formteil 1 mit der üblichen Gasinjektionstechnik oder einer der oben genannten Verfahrensvarianten der Aufblas- oder Ausblasverfahren hergestellt, vgl. Fig. 1. Danach wird die Werkzeugkavität wesentlich vergrößert und durch ein erneutes Aufbringen des Gasdruckes oder ein Halten oder eine Variation des Gasdruckes kann der extrem dünnwandige Funktionskanal 2 in dem Kunststoffbauteil 3 durch Verstrecken, Recken und/oder Dehnen hergestellt werden, vgl. Fig. 3 und 4. Für den Aufblasprozess ist es notwendig, dass die Formteiltemperatur im thermoelastischen oder thermoplastischen Bereich des jeweils zu verarbeitenden Kunststoffes liegt. Dies kann einerseits durch ein schnelles Vergrößern der Werkzeugkavität mit sofortigem Aufblasen erfolgen, so dass die Formteilwärme aus dem Gasinjektions-Prozess noch ausgenutzt werden kann. Andererseits kann dies durch eine erneute Erwärmung mit einem Heizsystem, bspw. durch Strahlungserwärmung, Konvektionserwärmung, Wärmeleitung oder mittels anderer Energiequellen wie Hochfrequenz- oder Mikrowellenstrahlung oder dergleichen bei geöffnetem oder geschlossenen Werkzeug gewährleistet werden.

Dadurch wird in Bezug auf den Gesamtquerschnitt des Gasführungskanals 2 ein wesentlich größerer Gaskanalquerschnitt hergestellt. Die Figuren 2 und 3 zeigen den Unterschied der zu erreichenden Restwandstärken nach den unterschiedlichen Herstellungsverfahren.

Bei dem nach einem herkömmlichen Gasinjektionsverfahren hergestellten Kunststoffbauteil 4 betragen die durch die Doppelpfeile 5,6,7 angedeuteten Wandstärken 2,54 mm, 4,66 mm und 1,6 mm. Hingegen sind bei dem nach dem erfindungsgemäßen Verfahren hergestellten Kunststoffbauteil 3 die durch die Doppelpfeile 8,9,10 angedeuteten Wandstärken auf 0,8 mm, 0,3 mm und 1,0 mm reduziert, mithin bei dem Ausführungsbeispiel zwischen dem 1,6 bis 15-fachen. Versuche haben darüber hinaus gezeigt, dass Reduzierfaktoren bis hin zum ca. 50-fachen erreicht werden können.

Bei diesem Vergleich fällt weiter auf, dass es gleichsam zu einer Umkehrung der Maxima aufweisenden Wandstärken kommt. Zeigt das Bauteil 4 gem. Fig. an seiner freien Spitze zwischen dem Doppelpfeil 6 ein Maximum der Wandstärke auf, zeigt das nach dem erfindungsgemäßen Verfahren hergestellte Bauteil 3 dort zwischen dem Doppelpfeil 9 ein Minimum. Umgekehrtes gilt für die etwa mittigen Bereiche der freien Dreiecksseiten. Ist zwischen dem Doppelfeil 7 ein Minimum der Wandstärke aufzufinden, ist bei dem Bauteil 3 zwischen dem Doppelpfeil 10 ein Maximum der Wandstärke angeordnet.

Insbesondere zeigt der Vergleich auch auf, dass bei dem Bauteil 3 die Innenkontur des Hohlraums 2 der Außenkontur weitestgehend folgt.

Es wird ersichtlich, dass mit dem neuen Verfahren Hohlräume mit wesentlich dünneren Restwandstärken hergestellt werden können. Das hat wiederum zur Folge, dass die Herstellung der Geometrie mit wesentlich weniger Material erfolgen kann. Aufgrund der mit dem Verfahren erreichbaren geringen Wandstärken können die Formteile mit sehr kurzer Kühlzeit hergestellt werden. Dies führt zu insgesamt geringeren Zykluszeiten und geringeren Produktionskosten.

Außerdem ist es möglich, mit diesem Verfahren Formteile 11 herzustellen, die eine ebenso hohe Präzision und Komplexität aufweisen können wie im Standard Spritzguss hergestellte Teile ohne Hohlraum, die bspw. in Fig. 5 durch die sich im wesentlichen flächenhaft sich erstreckenden Bereiche 12,13 angedeutet sind, angebunden an einen Hohlraum 14.

Darüber hinaus ist es möglich, Hohlräume 14 zu erzeugen, die eine dem Blasformen vergleichbare Komplexität der Hohlraumkontur und der Ausgangsgeometrie aufweisen, vgl. 3-D-Blasformen. Dies geht deutlich über die mit dem Vorformlingsprozess beim Spritzblasen erzeugbaren Geometrievarianten hinaus.

Ebenso ist die Kombination der drei genannten Vorteile problemlos möglich, wie das Ausführungsbeispiel in Figur 4 aufzeigt, das nicht in einem Spritzblasverfahren herstellbar ist.

An jeder Stelle des Prozesses kann statt Gas auch ein anderes Fluid verwendet werden. Hierfür kommen beispielsweise Wasser oder Öle in Frage. Darüber hinaus kann das Fluid auch eine Polymerschmelze sein, die nach der Kavitätsvergrößerung massiv erstarrt oder mittels eines Blowing Agents während der Kavitätsvergrößerung, vor der Erstarrung, aufgeschäumt wird.

## Patentansprüche

1. Verfahren zum Herstellen von Kunststoffbauteilen, wobei in einem ersten Schritt ein Kunststoffformteil mit einem Hohlraum und relativ dicken Hohlraumwände geformt wird, wobei das hohlförmige Kunststoffformteil durch Einleiten eines Fluids in einen mit Kunststoffschmelze gefüllten Formraum gebildet wird , dass nachfolgend der Formraum entsprechend einer vorgegebenen Geometrie des Kunststoffbauteils vergrößert wird und in einem weiteren Schritt durch Anwenden eines vorgegebenen Fluidinnendrucks der Hohlraum des Kunststoffformteils in einem thermoelastischen und/oder thermoplastischen Temperaturbereich gehalten unter Dehnung, Streckung und/oder Reckung der Hohlraumwände vergrößert wird, wobei die Wandstärken der Hohlräume sich verringern.

2. Verfahren nach nach Anspruch 1, **dadurch gekennzeichnet, dass** das Fluid ein Gas ist.

3. Verfahren nach Anspruch 1, **dadurch gekennzeichnet, dass** das Fluid eine flüssige Phase aufweist.

4. Verfahren nach Anspruch 3, **dadurch gekennzeichnet, dass** das Fluid eine in dem Hohlraum erstarrende Polymerschmelze ist.

5. Verfahren nach Anspruch 4, **dadurch gekennzeichnet, dass** eine Druckbeaufschlagung des Fluids durch ein Aufschäumen der Polymerschmelze erfolgt.

## Claims

1. A method for producing plastic components, wherein in a first step a moulded plastic component with a cavity and relatively thick cavity walls is formed, wherein the hollow moulded plastic component is formed by introducing a fluid into a mould space comprising molten plastic, that subsequently the mould space is enlarged corresponding to a predetermined geometry of the plastic component, and in a further step with the application of a predetermined internal fluid pressure the cavity of the moulded plastic part is held in a thermoelastic and/or thermoplastic temperature range while extending, stretching and/or drawing the cavity walls, wherein the wall thicknesses of the cavities are reduced.

2. The method according to claim 1, **characterised in that** the fluid is a gas.

3. The method according to claim 1, **characterised in that** the fluid comprises a liquid phase.

4. The method according to claim 3, **characterised in that** the fluid is a molten polymer solidifying in the cavity.

5. The method according to claim 4, **characterised in that** pressurising the fluid takes place by foaming up the molten polymer.

## Revendications

1. Procédé pour la fabrication de pièces en plastique, dans lequel au cours d'une première étape, une pièce moulée en plastique est moulée avec une cavité et des parois de cavité relativement épaisses, sachant que la pièce moulée en plastique creuse est formée par introduction d'un fluide dans un espace de moule rempli de fonte de plastique, qu'ensuite, l'espace de moule est agrandi conformément à une géométrie prédéfinie de la pièce en plastique et au cours d'une étape suivante, par application d'une pression interne de fluide, la cavité de la pièce moulée en plastique est maintenue dans une plage de températures thermoélastiques et/ou thermoplastiques par dilatation, allongement et/ou étirage des parois de la cavité, sachant que les épaisseurs de paroi des cavités se réduisent.

2. Procédé selon la revendication 1, **caractérisé en ce que** le fluide est un gaz.

3. Procédé selon la revendication 1, **caractérisé en ce que** le fluide présente une phase liquide.

4. Procédé selon la revendication 3, **caractérisé en ce que** le fluide est une fonte de polymère se solidifiant dans la cavité.

5. Procédé selon la revendication 4, **caractérisé en ce que** le fluide est alimenté en pression par un moussage de la fonte de polymère.
